(19) Europäisches Patentamt / European Patent Office / Office européen des brevets

(11) **EP 4 386 920 A1**

(12) **EUROPEAN PATENT APPLICATION**
published in accordance with Art. 153(4) EPC

(43) Date of publication:
**19.06.2024 Bulletin 2024/25**

(21) Application number: **21953113.4**

(22) Date of filing: **11.08.2021**

(51) International Patent Classification (IPC):
$H01M\ 10/0525^{(2010.01)}$    $H01M\ 4/505^{(2010.01)}$
$H01M\ 4/50^{(2010.01)}$    $H01M\ 4/38^{(2006.01)}$
$H01M\ 4/36^{(2006.01)}$

(52) Cooperative Patent Classification (CPC):
Y02E 60/10

(86) International application number:
**PCT/CN2021/112091**

(87) International publication number:
**WO 2023/015489 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventor: **YUAN, Guoxia Ningde, Fujian 352100 (CN)**

(74) Representative: **Klunker IP Patentanwälte PartG mbB Destouchesstraße 68 80796 München (DE)**

(54) **ELECTROCHEMICAL DEVICE AND ELECTRONIC DEVICE**

(57) This application provides an electrochemical device and an electronic device. The electrochemical device includes a positive electrode. The positive electrode includes a positive current collector and a positive active material layer disposed on at least one surface of the positive current collector. The positive active material layer includes a lithium manganese oxide. The lithium manganese oxide includes aluminum and sodium. Based on a weight of the positive active material, a weight percentage of the aluminum is A%, a weight percentage of the sodium is B%, and the electrochemical device satisfies $0.01 \le A \le 2$ and $0.001 \le B \le 1$. This application improves cycle performance of the electrochemical device, especially the cycle performance under high-temperature conditions; and also improves high-temperature storage performance of the electrochemical device.

FIG. 1

Description

## TECHNICAL FIELD

This application relates to the technical field of electrochemistry, and in particular, to an electrochemical device and an electronic device.

## BACKGROUND

Lithium-ion batteries are widely used in the field of consumer electronics by virtue of many advantages such as high volumetric and gravimetric energy densities, a long cycle life, a high nominal voltage, a low self-discharge rate, a small size, and a light weight. With the rapid development of electric vehicles and mobile electronic devices in recent years, higher requirements have been imposed on lithium-ion batteries, for example, a requirement that a lithium-ion battery is still stable in high-temperature environments.

However, currently, a specific capacity of the lithium-ion battery fades drastically under high-temperature conditions because the high temperature gives rise to side reactions inside the lithium-ion battery and results in structural disruption of a positive active material in the battery, thereby impairing stability and longevity of the lithium-ion battery. Therefore, a lithium-ion battery characterized by longevity under high-temperature conditions is urgently needed.

## SUMMARY

An objective of this application is to provide an electrochemical device and an electronic device to improve high-temperature cycle performance of the electrochemical device. Specific technical solutions are as follows:
A first aspect of this application provides an electrochemical device. The electrochemical device includes a positive electrode. The positive electrode includes a positive current collector and a positive active material layer disposed on at least one surface of the positive current collector. The positive active material layer includes a lithium manganese oxide. The lithium manganese oxide includes aluminum and sodium. Based on a weight of the positive active material, a weight percentage of the aluminum is A%, a weight percentage of the sodium is B%, and the electrochemical device satisfies $0.01 \leq A \leq 2$ and $0.001 \leq B \leq 1$.

The positive active material layer according to this application includes the lithium manganese oxide, and the lithium manganese oxide includes aluminum and sodium. The amount of manganese (Mn) dissolved out can be reduced by controlling the weight percentage of aluminum and sodium to fall within the above range, thereby improving the high-temperature cycle performance of the electrochemical device. Without being limited to any theory, a possible reason is that the aluminum at a weight percentage falling within the above range can enhance the stability of a Mn-O bond in the lithium manganese oxide, improve a crystal structure of the lithium manganese oxide, and reduce the Jahn-Tellen effect of manganese. When added at a weight percentage falling within the above range, sodium as an impurity element exerts almost no impact on the high-temperature cycle performance of the electrochemical device. Therefore, on the whole, by controlling the weight percentage of aluminum and sodium to fall within the above range, this application can reduce the amount of Mn dissolved out and reduce the impact of sodium on the performance of the positive electrode, thereby improving the cycle performance and the storage capacity retention performance of the electrochemical device.

The lithium manganese oxide in this application may include, but without being limited to, modified $LiMn_2O_4$ (hereinafter referred to as modified LMO). The method for modifying the lithium manganese oxide is not particularly limited in this application, and the lithium manganese oxide may be modified by, for example, adding an aluminum-containing compound during synthesis of the $LiMn_2O_4$ so that the lithium manganese oxide in this application contains aluminum.

The positive active material layer in this application may be disposed on at least one surface of the positive current collector. For example, the positive active material layer is disposed on one surface of the positive current collector, or, the positive active material layer is disposed on both surfaces of the positive current collector.

In an embodiment of this application, the electrochemical device according to this application satisfies at least one of conditions (a) or (b): (a) $0.011 \leq A + B \leq 2.5$; and (b) $0.1 \leq A/B < 125$.

In an embodiment of this application, the electrochemical device satisfies: $0.03 \leq A + B < 2$, and $2 < A/B \leq 125$.

By controlling the weight percentage sum (that is, A+B) of aluminum and sodium in the positive active material to fall within the above range, and/or, by controlling the weight ratio between aluminum and sodium (that is, A/B) in the positive active material to fall within the above range, this application can achieve an electrochemical device of good high-temperature cycle performance and storage capacity retention performance.

In an embodiment of this application, the lithium manganese oxide in this application further includes niobium. Based on the weight of the positive active material, a weight percentage of the niobium is C% and satisfies $0 < C \leq 1$.

Without being limited to any theory, the applicant hereof finds that the niobium at a weight percentage falling within the above range can further improve the crystal structure of the lithium manganese oxide, reduce the number of active crystal planes (111) of the lithium manganese oxide that are exposed on the outer surface of the lithium manganese oxide. That is, the number of active crystal planes (111) in contact with the electrolytic solution is reduced, thereby reducing side reactions between the electrolytic solution and the surface of the lithium manganese oxide, further reducing the Mn dissolved out, and in turn, improving the high-temperature cycle performance and storage capacity retention performance of the electrochemical device. The weight percentage of the niobium in the positive active material layer can be controlled by adding a niobium-containing compound and controlling the dosage of the niobium-containing compound during modification of the lithium manganese oxide.

In an embodiment of this application, the electrochemical device in this application satisfies at least one of conditions (c) to (d): (c) $0.011 < A + C \leq 2.8$; (d) $0.011 \leq A+ B + C \leq 3.3$; and (e) $0 < C/B \leq 40$. Without being limited to any theory, this application can achieve an electrochemical device of good high-temperature cycle performance and storage capacity retention performance by controlling the weight percentage sum (that is, A+C) of aluminum and niobium in the positive active material to fall within the above range, and/or, by controlling the weight percentage sum (that is, A+B+C) of aluminum, sodium, and niobium in the positive active material to fall within the above range, and/or, by controlling the weight ratio between niobium and sodium (that is, C/B) in the positive active material to fall within the above range.

In an embodiment of this application, the electrochemical device satisfies $0.07 \leq A+C \leq 2.3$.

By controlling the weight percentage sum (that is, A+C) of aluminum and niobium in the positive active material to fall within the above range, this application can achieve better high-temperature cycle performance and storage capacity retention performance. In an embodiment of this application, in an X-ray diffraction (XRD) test performed on positive electrode plate powder of this application, the lithium manganese oxide satisfies at least one of conditions (f) to (g): (f) the lithium manganese oxide exhibits, at 18° to 20°, a first diffraction peak corresponding to a (111) crystal plane, and a peak intensity of the first diffraction peak is $I_{(111)}$; (g) the lithium manganese oxide exhibits, at 43° to 45°, a second diffraction peak corresponding to a (400) crystal plane, and a peak intensity of the second diffraction peak is $I_{(400)}$; and (h) the lithium manganese oxide exhibits, at 63° to 65°, a third diffraction peak corresponding to a (440) crystal plane, and a peak intensity of the third diffraction peak is $I_{(440)}$.

In an embodiment of this application, the electrochemical device in this application satisfies at least one of conditions (i) to (j): (i) $0.25 < I_{(400)}/I_{(111)} < 0.55$; and (j) $0.35 < I_{(440)}/I_{(400)} < 0.55$.

Without being limited to any theory, the applicant hereof finds that, by controlling $I_{(400)}/I_{(111)}$ to fall within the above range, and/or, by controlling $I_{(440)}/I_{(400)}$ to fall within the above range, such settings can further improve the crystal structure of the lithium manganese oxide, reduce the number of active crystal planes (111) of the lithium manganese oxide that are exposed on the outer surface of the lithium manganese oxide, thereby reducing side reactions between the electrolytic solution and the surface of the lithium manganese oxide, further reducing the Mn dissolved out, and in turn, improving the high-temperature cycle performance and storage capacity retention performance of the electrochemical device.

In an embodiment of this application, the positive active material layer may further include a lithium nickel cobalt manganese oxide. Based on the weight of the positive active material, a weight percentage of cobalt is less than or equal to 15%.

The positive active material layer in this application may further include a lithium nickel cobalt manganese oxide, and residual alkalis (such as $Li_2CO_3$ or $LiOH$) on the surface of the lithium nickel cobalt manganese oxide can react with hydrofluoric acid (HF) in the electrolytic solution to reduce acidity of the electrolytic solution and further reduce the Mn dissolved out, thereby improving the high-temperature cycle performance and storage capacity retention performance of the electrochemical device. Therefore, in this application, based on the weight of the positive active material, by controlling the weight percentage of cobalt in the positive active material to be less than or equal to 15%, the production cost can be reduced in parallel with further improvement of the high-temperature cycle performance and storage capacity retention performance of the electrochemical device.

In an embodiment of this application, a molar ratio between nickel and manganese in the positive active material layer is 0.02: 1 to 0.7: 1, and a molar ratio between cobalt and manganese is less than or equal to 0.3: 1.

By controlling the molar ratio between nickel and manganese in the positive active material layer as well as the molar ratio between cobalt and manganese to fall within the above ranges, the nickel, manganese, and cobalt in the positive active material layer can be configured properly, thereby achieving an electrochemical device of excellent high-temperature cycle performance and storage capacity retention performance.

In an embodiment of this application, the positive active material layer may further include lithium iron phosphate ($LiFePO_4$, that is, LFP). An average particle size of the lithium iron phosphate is less than an average particle size of the lithium manganese oxide.

Without being limited to any theory, the relatively small particle size of the lithium iron phosphate makes the lithium iron phosphate exist on at least a part of the surface of the lithium manganese oxide. That is, the lithium manganese oxide may be partly or fully coated with the lithium iron phosphate, thereby suppressing the side reactions on the surface of the lithium manganese oxide and further improving the high-temperature cycle performance and storage capacity retention performance of the electrochemical device.

In an embodiment of this application, a molar ratio between iron and manganese in the positive active material layer is 0.02: 1 to 0.25: 1.

By controlling the molar ratio between iron and manganese in the positive active material layer to fall within the above range, the ion and manganese in the positive active material layer can be configured properly, thereby suppressing the side reactions on the surface of the lithium manganese oxide and further improving the high-temperature cycle performance and storage capacity retention performance of the electrochemical device.

In an embodiment of this application, based on the weight of the positive active material layer, a weight percentage of the lithium iron phosphate is less than or equal to 30%.

Without being bound by any theory, when the weight percentage of the lithium iron phosphate in the positive active material layer is unduly high (for example, higher than 30%), the energy density of the electrochemical device is impaired. By controlling the weight percentage of the lithium iron phosphate in the positive active material layer to fall within the above range, the electrochemical device achieves a high energy density in parallel with further improvement of the high-temperature cycle performance and storage capacity retention performance of the electrochemical device.

In an embodiment of this application, a compacted density P of the positive active material layer satisfies $2.7$ $g/cm^3 \leq P \leq 4.0$ $g/cm^3$. Without being limited to any theory, when the compacted density of the positive active material layer is unduly low (for example, lower than $2.7$ $g/cm^3$), the compacted density is adverse to improvement of the energy density of the electrochemical device. When the compacted density of the positive active material layer is unduly high (for example, higher than $4.0$ $g/cm^3$), the positive electrode is more prone to snap off, thereby being adverse to the safety of the electrochemical device. By controlling the compacted density of the positive active material layer to fall within the above range, the electrochemical device achieves good safety in parallel with achievement of a high energy density.

This application provides an electrochemical device and an electronic device. The positive electrode of the electrochemical device includes a positive current collector and a positive active material layer disposed on at least one surface of the positive current collector. The positive active material layer includes a lithium manganese oxide. The lithium manganese oxide includes aluminum and sodium. By controlling the weight percentage A% of aluminum and the weight percentage B% of sodium in the positive active material to satisfy $0.01 \leq A \leq 2$ and $0.001 \leq B \leq 1$, the crystal structure of the lithium manganese oxide can be improved, and the amount of manganese dissolved out can be reduced, thereby improving the cycle performance of the electrochemical device, especially the cycle performance under high-temperature conditions, and also improving the high-temperature storage performance of the electrochemical device.

## BRIEF DESCRIPTION OF DRAWING

To describe the technical solutions in this application or the prior art more clearly, the following outlines the drawings to be used in the embodiments of this application or the prior art. Evidently, the drawings outlined below are merely a part of embodiments of this application.

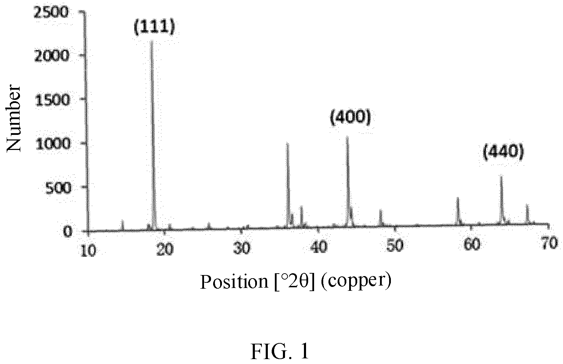

FIG. 1 is an XRD pattern of positive electrode plate powder according to Embodiment 35 of this application.

## DETAILED DESCRIPTION OF EMBODIMENTS

To make the objectives, technical solutions, and advantages of this application clearer, the following describes this application in further detail with reference to drawings and embodiments. Evidently, the described embodiments are merely a part of but not all of the embodiments of this application. All other embodiments derived by a person of ordinary skill in the art based on the embodiments of this application without making any creative efforts fall within the protection scope of this application.

It is hereby noted that in specific embodiments of this application, this application is construed by using a lithium-ion battery as an example of the electrochemical device, but the electrochemical device according to this application is not limited to the lithium-ion battery.

A first aspect of this application provides an electrochemical device. The electrochemical device includes a positive electrode. The positive electrode includes a positive current collector and a positive active material layer disposed on at least one surface of the positive current collector. The positive active material layer includes a lithium manganese oxide. The lithium manganese oxide includes aluminum and sodium. Based on a total weight of the positive active material, a weight percentage of the aluminum is A%, a weight percentage of the sodium is B%, and the electrochemical device satisfies $0.01 \leq A \leq 2$ and $0.001 \leq B \leq 1$. In an embodiment of this application, the electrochemical device satisfies $0.49 \leq A \leq 1.8$ and $0.001 \leq B < 0.5$.

The positive active material layer according to this application includes the lithium manganese oxide, and the lithium manganese oxide includes aluminum and sodium. The amount of manganese (Mn) dissolved out can be reduced by controlling the weight percentage of aluminum and sodium to fall within the above range, thereby improving the high-temperature cycle performance of the electrochemical device. Without being limited to any theory, a possible reason is that the aluminum at a weight percentage falling within the above range can enhance the stability of a Mn-O bond in the lithium manganese oxide, improve a crystal structure of the lithium manganese oxide, and reduce the Jahn-Tellen effect of manganese. When added at a weight percentage falling within the above range, sodium as an impurity element exerts almost no impact on the high-temperature cycle performance of the electrochemical device. Therefore, on the whole, by controlling the weight percentage of aluminum and sodium to fall within the above range, this application can reduce the amount of Mn dissolved out and reduce the impact of sodium on the performance of the positive electrode, thereby improving the cycle performance and the storage capacity retention performance of the electrochemical device.

The lithium manganese oxide in this application may include, but without being limited to, modified $LiMn_2O_4$ (hereinafter referred to as modified LMO). The method for modifying the lithium manganese oxide is not particularly limited in this application, and the lithium manganese oxide may be modified by, for example, adding an aluminum-containing compound during synthesis of the $LiMn_2O_4$ so that the lithium manganese oxide in this application contains aluminum.

The positive active material layer in this application may be disposed on at least one surface of the positive current collector. For example, the positive active material layer is disposed on one surface of the positive current collector, or, the positive active material layer is disposed on both surfaces of the positive current collector.

In an embodiment of this application, the electrochemical device according to this application satisfies at least one of conditions (a) or (b): (a) $0.011 \leq A + B \leq 2.5$; and (b) $0.1 \leq A/B < 125$. In some embodiments, A+B may be 0.011, 0.03, 0.05, 0.07, 0.1, 0.3, 0.5, 0.9, 1.0, 1.1, 1.3, 1.5, 1.7, 1.9, 2.0, 2.5, or a value falling within a range formed by any two thereof. In an embodiment of this application, A/B may be 0.1, 0.3, 0.5, 0.7, 0.9, 1.0, 3.0, 5.0, 7.0, 10, 15, 20, 25, 40, 60, 80, 100, 110, 120, 125, or a value falling within a range formed by any two thereof.

Without being limited to any theory, by controlling the weight percentage sum (that is, A+B) of aluminum and sodium in the positive active material to fall within the above range, and/or, by controlling the weight ratio between aluminum and sodium (that is, A/B) in the positive active material to fall within the above range, this application can achieve an electrochemical device of good high-temperature cycle performance and storage capacity retention performance. When the A/B ratio is unduly high, the improvement in the cycle performance of the electrochemical device is limited. When the A/B ratio is unduly low, the reversible capacity of the electrochemical device may be impaired.

In an embodiment of this application, the lithium manganese oxide further includes niobium. Based on the total weight of the positive active material, a weight percentage of the niobium is C% and satisfies $0 < C \leq 1$. In some embodiments, the value of C satisfies $0.0001 \leq C \leq 0.7$. In some embodiments, the value of C satisfies $0.0001 \leq C \leq 0.5$. In some embodiments, C may be 0.001, 0.003, 0.005, 0.008, 0.1, 0.3, 0.5, 0.7, 0.9, 1.0, or a value falling within a range formed by any two thereof.

Without being limited to any theory, the applicant hereof finds that the niobium at a weight percentage falling within the above range can further improve the crystal structure of the lithium manganese oxide, reduce the number of active crystal planes (111) of the lithium manganese oxide that are exposed on the outer surface of the lithium manganese oxide. That is, the number of active crystal planes (111) in contact with the electrolytic solution is reduced, thereby reducing side reactions between the electrolytic solution and the surface of the lithium manganese oxide, further reducing the Mn dissolved out, and in turn, improving the high-temperature cycle performance and storage capacity retention performance of the electrochemical device. The weight percentage of the niobium in the positive active material layer can be controlled by adding a niobium-containing compound and controlling the dosage of the niobium-containing compound during modification of the lithium manganese oxide. The niobium-containing compound is not particularly limited in this application, and may include, but without being limited to, $Nb_2O_5$ or $NbF_5$, for example.

In an embodiment of this application, the electrochemical device according to this application satisfies the following condition: $0.01 < A + C \leq 2.8$. In some embodiments, the electrochemical device satisfies $0.011 < A + C \leq 2$. In some embodiments, the electrochemical device satisfies $0.07 \leq A + C \leq 2.3$. In some embodiments, the electrochemical device satisfies $0.01 < A + C \leq 1.6$. In some embodiments, A+C may be 0.011, 0.03, 0.05, 0.07, 0.09, 0.1, 0.3, 0.5, 0.7, 0.9, 1.0, 1.2, 1.4, 1.6, 1.8, 2.0, 2.2, 2.4, 2.6, 2.8, or a value falling within a range formed by any two thereof.

By controlling the weight percentage sum (that is, A+C) of aluminum and niobium in the positive active material to fall within the above range, the performance of the electrochemical device is in a relatively good state. When the value of A+C is unduly high, the improvement in the cycle performance of the electrochemical device is limited, and the reversible capacity of the electrochemical device may be impaired.

In an embodiment of this application, the electrochemical device according to this application satisfies the following condition: $0.011 \leq A + B + C \leq 3.3$, and in some embodiments, $0.1 \leq A + B + C \leq 2.0$. In some embodiments, A+B+C may be 0.011, 0.05, 0.07, 0.1, 0.3, 0.5, 0.7, 0.9, 1.0, 1.2, 1.4, 1.6, 1.8, 2.0, 2.5, 3.0, 3.3, or a value falling within a range formed by any two thereof.

By controlling the value of the A+B+C to fall within the above range, the electrochemical device achieves good cycle performance and storage performance.

In an embodiment of this application, the electrochemical device according to this application satisfies the following condition: $0 < C/B \leq 40$. In some embodiments, $0 < C/B \leq 10$. In some embodiments, $0 < C/B \leq 5$. In some embodiments, $0 < C/B \leq 3$. In some embodiments, C/B may be 0.0001, 0.0005, 0.001, 0.003, 0.005, 0.007, 0.009, 0.01, 0.03, 0.05, 0.07, 0.09, 0.1, 0.3, 0.5, 0.7, 0.9, 1.0, 1.2, 1.5, 1.7, 1.9, 2.0, 3.0, 5.0, 7.0, 9.0, 10.0, 15, 20, 25, 30, 35, 40, or a value falling within a range formed by any two thereof.

By controlling the C/B ratio to fall within the above range, the electrochemical device can achieve good high-temperature cycle performance and storage capacity retention performance. When the C/B ratio is unduly high, the cycle performance of the electrochemical device may be impaired. When the C/B ratio is unduly low, the protection for the active crystal plane (111) of the lithium manganese oxide is relatively weak, the suppression of the Mn dissolution is limited, and the impairment of the reversible capacity of the electrochemical device may be increased.

In an embodiment of this application, in an X-ray diffraction (XRD) test performed on positive electrode plate powder of this application, the lithium manganese oxide exhibits, at 18° to 20°, a first diffraction peak corresponding to a (111) crystal plane, and a peak intensity of the first diffraction peak is $I_{(111)}$.

In an embodiment of this application, in an X-ray diffraction (XRD) test performed on positive electrode plate powder of this application, the lithium manganese oxide exhibits, at 43° to 45°, a second diffraction peak corresponding to a (400) crystal plane, and a peak intensity of the second diffraction peak is $I_{(400)}$.

In an embodiment of this application, in an X-ray diffraction (XRD) test performed on positive electrode plate powder of this application, the lithium manganese oxide exhibits, at 63° to 65°, a third diffraction peak corresponding to a (440) crystal plane, and a peak intensity of the third diffraction peak is $I_{(440)}$.

The positive electrode plate in this application includes a positive active material layer. The positive active material layer includes a positive active material. A main ingredient of the positive active material is a lithium manganese oxide. The XRD test shows that the lithium manganese oxide in this application includes a (111) crystal plane, a (400) crystal plane, and a (440) crystal plane.

In an embodiment of this application, the electrochemical device according to this application satisfies: $0.25 < I_{(400)}/I_{(111)} < 0.55$.

In an embodiment of this application, the electrochemical device according to this application satisfies: $0.35 < I_{(440)}/I_{(400)} < 0.55$.

Without being limited to any theory, by controlling $I_{(400)}/I_{(111)}$ to fall within the above range, and/or, by controlling $I_{(440)}/I_{(400)}$ to fall within the above range, such settings can further improve the crystal structure of the lithium manganese oxide, reduce the number of active crystal planes (111) of the lithium manganese oxide that are exposed on the outer surface of the lithium manganese oxide, thereby reducing side reactions between the electrolytic solution and the surface of the lithium manganese oxide, further reducing the Mn dissolved out, and in turn, improving the high-temperature cycle performance and storage capacity retention performance of the electrochemical device.

In an embodiment of this application, the positive active material further includes an element M, and the element M includes at least one of Cu, Fe, Mg, Ti, Zr, Zn, W, Sr, or Y In some embodiments, the element M may include Mg and at least one of Cu, Fe, Ti, Zr, Zn, W, Sr, or Y

In an embodiment of this application, based on the weight of the positive active material, a weight percentage of the element M is less than or equal to 5%. In some embodiments, the weight percentage of the element M may be 0.01%, 0.03%, 0.05%, 0.07%, 0.1%, 0.3%, 0.5%, 0.7%, 1.0%, 2.0%, 3.0%, 5.0%, or a value falling within a range formed by any two thereof.

In an embodiment of this application, the positive active material further includes an element X, and the element X includes at least one of S, P, B, F, or Cl.

In an embodiment of this application, based on the weight of the positive active material, a weight percentage of the element X is less than or equal to 3%. In some embodiments, the weight percentage of the element X may be 0.01%, 0.03%, 0.05%, 0.07%, 0.1%, 0.3%, 0.5%, 0.7%, 1.0%, 2.0%, 3.0%, or a value falling within a range formed by any two thereof.

In an embodiment of this application, the positive active material layer may further include a lithium nickel cobalt manganese oxide. Based on the weight of the positive active material, a weight percentage of cobalt is less than or equal to 15%.

Without being limited to any theory, the positive active material layer in this application may further include a lithium nickel cobalt manganese oxide, and residual alkalis (such as $Li_2CO_3$ or LiOH) on the surface of the lithium nickel cobalt manganese oxide can react with hydrofluoric acid (HF) in the electrolytic solution to reduce acidity of the electrolytic solution and further reduce the Mn dissolved out, thereby improving the high-temperature cycle performance and storage capacity retention performance of the electrochemical device. When the weight percentage of cobalt is unduly high, the production cost of the electrochemical device is increased. Therefore, in this application, based on the weight of the positive active material, by controlling the weight percentage of cobalt in the lithium nickel cobalt manganese oxide to be less than or equal to 15%, the production cost can be reduced in parallel with further improvement of the high-temperature cycle performance and storage capacity retention performance of the electrochemical device.

The lithium nickel cobalt manganese oxide is not particularly limited in this application, as long as the objectives of this application can be achieved. For example, the lithium nickel cobalt manganese oxide may be lithium nickel cobalt manganese oxide (hereinafter referred to as NCM). The lithium nickel cobalt manganese oxide may be single-crystal lithium nickel cobalt manganese oxide or polycrystalline lithium nickel cobalt manganese oxide.

In an embodiment of this application, a molar ratio between nickel and manganese in the positive active material layer is 0.02: 1 to 0.7: 1.

In an embodiment of this application, a molar ratio between cobalt and manganese in the positive active material layer is less than or equal to 0.3: 1.

In this application, by controlling the molar ratio between nickel and manganese in the positive active material layer as well as the molar ratio between cobalt and manganese to fall within the above ranges, the nickel, manganese, and cobalt in the positive active material layer can be configured properly, thereby achieving an electrochemical device of excellent high-temperature cycle performance and storage capacity retention performance.

In an embodiment of this application, the positive active material layer may further include lithium iron phosphate ($LiFePO_4$, that is, LFP). An average particle size of the lithium iron phosphate is less than an average particle size of the lithium manganese oxide.

In an embodiment of this application, the average particle size of lithium iron phosphate is less than or equal to 2 $\mu$m. In some embodiments, the average particle size of lithium iron phosphate is less than or equal to 1.8 $\mu$m. In some embodiments, the average particle size of lithium iron phosphate is less than or equal to 1.5 $\mu$m. In some embodiments, the average particle size of lithium iron phosphate is less than or equal to 1.2 $\mu$m. In some embodiments, the average particle size of lithium iron phosphate is less than or equal to 1.0 $\mu$m.

In an embodiment of this application, the small-particle-size characteristic of the lithium iron phosphate makes the lithium iron phosphate exist on at least a part of the surface of the lithium manganese oxide. That is, the lithium manganese oxide may be partly or fully coated with the lithium iron phosphate, thereby suppressing the side reactions on the surface of the lithium manganese oxide and further improving the high-temperature cycle performance and storage capacity retention performance of the electrochemical device.

In an embodiment of this application, a molar ratio between iron and manganese in the positive active material layer is 0.02: 1 to 0.25: 1. In some embodiments, a molar ratio between iron and manganese in the positive active material layer is 0.03: 1 to 0.13: 1. In some embodiments, a molar ratio between iron and manganese in the positive active material layer is 0.05: 1 to 0.12: 1. In some embodiments, a molar ratio between iron and manganese in the positive active material layer is 0.03: 1 to 0.13: 1.

By controlling the molar ratio between iron and manganese in the positive active material layer to fall within the above range, the ion and manganese in the positive active material layer can be configured properly, thereby suppressing the side reactions on the surface of the lithium manganese oxide and further improving the high-temperature cycle performance and storage capacity retention performance of the electrochemical device.

In an embodiment of this application, based on the weight of the positive active material layer, a weight percentage of the lithium iron phosphate is less than or equal to 30%.

Without being bound by any theory, when the weight percentage of the lithium iron phosphate in the positive active material layer is unduly high (for example, higher than 30%), the energy density of the electrochemical device is impaired. By controlling the weight percentage of the lithium iron phosphate in the positive active material layer to fall within the above range, the electrochemical device achieves a high energy density in parallel with further improvement of the high-temperature cycle performance and storage capacity retention performance of the electrochemical device.

In an embodiment of this application, a compacted density P of the positive active material layer satisfies 2.7 g/cm$^3$ $\leq$ P $\leq$ 4.0 g/cm$^3$. Without being limited to any theory, when the compacted density of the positive active material layer is unduly low (for example, lower than 2.7 g/cm$^3$), the compacted density is adverse to improvement of the energy density of the electrochemical device. When the compacted density of the positive active material layer is unduly high (for example, higher than 4.0 g/cm$^3$), the positive electrode is more prone to snap off, thereby being adverse to the safety of the electrochemical device. By controlling the compacted density of the positive active material layer to fall within the above range, the electrochemical device achieves good safety in parallel with achievement of a high energy density.

The method for preparing the lithium manganese oxide is not particularly limited in this application, and may be a preparation method well known by a person skilled in the art. For example, in a process of synthesizing the lithium manganese oxide, $LiMn_2O_4$ is doped with an aluminum-containing compound (such as $Al_2O_3$, $Al(OH)_3$, or $AlF_3$) to obtain the lithium manganese oxide, that is, modified LMO. In addition, this application can change the weight percentage of aluminum in the positive active material layer by adjusting the weight percentage of aluminum in the lithium manganese oxide, for example, by controlling the dosage of the aluminum-containing compound. This application can change the weight percentage of sodium in the positive active material layer by adjusting the weight percentage of sodium in the precursor of $LiMn_2O_4$. The process of adjusting such weight percentage is not particularly limited in this application, as long as the objectives of this application can be achieved.

The positive electrode plate is not particularly limited in this application, as long as the objectives of this application can be achieved. For example, the positive electrode plate generally includes a positive current collector and a positive active material layer. The positive current collector is not particularly limited, and may be any positive current collector well known in the art. For example, the positive current collector may be an aluminum foil, an aluminum alloy foil, or a composite current collector.

The negative electrode plate is not particularly limited in this application, as long as the objectives of this application can be achieved. For example, the negative electrode plate typically includes a negative current collector and a negative active material layer. The negative current collector is not particularly limited in this application, and may be made of a material such as a metal foil or a porous metal sheet. For example, the negative current collector is a foil or porous plate made of a metal such as copper, nickel, titanium, or iron, or an alloy thereof, such as a copper foil. The negative active material layer includes a negative active material, a conductive agent, a binder, and a thickener. The negative active material is not particularly limited, and may be any negative active material well known in the art. For example, the negative active material may include at least one of artificial graphite, natural graphite, mesocarbon microbead (MCMB), soft carbon, hard carbon, silicon, silicon-carbon compound, SiO, Li-Sn alloy, Li-Sn-O alloy, Sn, SnO, $SnO_2$, spinel-structured lithium titanium oxide $Li_4Ti_5O_{12}$, Li-Al alloy, or metallic lithium. The conductive agent may be at least one of graphite, superconductive carbon, acetylene black, carbon black, Ketjen black, carbon dots, carbon nanotubes, graphene, or carbon nanofibers. The binder may be at least one of styrene butadiene rubber (SBR), polyvinylidene difluoride (PVDF), polytetrafluoroethylene (PTFE), polyvinyl butyral (PVB), water-based acrylic resin (water-based acrylic resin), or carboxymethyl cellulose (CMC). The thickener may be carboxymethyl cellulose (CMC).

The substrate of the separator according to this application includes, but is not limited to, at least one of polyethylene (PE), polypropylene (PP), polyethylene terephthalate (PET), polyimide (PI), or aramid fiber. For example, the polyethylene includes a component selected from at least one of high-density polyethylene, lowdensity polyethylene, and ultra-high-molecular-weight polyethylene. Especially, the polyethylene and the polypropylene are highly effective in preventing short circuits, and can improve stability of the electrochemical device through a turn-off effect. The substrate may be a single-layer structure or a multi-layer hybrid composite structure with a thickness of 3 $\mu$m to 20 $\mu$m.

The lithium-ion battery according to this application further includes an electrolyte. The electrolyte may be one or more of a gel electrolyte, a solid-state electrolyte, and an electrolytic solution. The electrolytic solution includes a lithium salt and a nonaqueous solvent. In some embodiments of this application, the lithium salt is at least one selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, and lithium difluoroborate. For example, the lithium salt is $LiPF_6$ because it provides a high ionic conductivity and improves cycle properties. The nonaqueous solvent may be a carbonate compound, a carboxylate compound, an ether compound, another organic solvent, or any combination thereof. The carbonate compound may be a chain carbonate compound, a cyclic carbonate compound, a fluorocarbonate compound, or any combination thereof. Examples of the chain carbonate compound are dimethyl carbonate (DMC), diethyl carbonate (DEC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof. Examples of the carboxylate compound are methyl formate, methyl acetate, ethyl acetate, n-propyl acetate, tert-butyl acetate, methyl propionate, ethyl propionate, propyl propionate, $\gamma$-butyrolactone, decanolactone, valerolactone, mevalonolactone, caprolactone, or any combination thereof. Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof. Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

A second aspect of this application provides an electronic device. The electronic device includes the electrochemical device described in the foregoing embodiment of this application.

The electronic device according to this application is not particularly limited, and may be any electronic device known in the prior art. In some embodiments, the electronic device may include, but without being limited to, a notebook computer, peninputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The preparation process of the electrochemical device is well known to a person skilled in the art, and is not particularly limited in this application. For example, a process of manufacturing a lithium-ion battery may include: stacking a positive electrode and a negative electrode that are separated by a separator, performing operations such as winding and folding as required, placing them into a housing, injecting an electrolytic solution into the housing, and sealing the housing. In addition, an overcurrent prevention element, a guide plate, and the like may be further placed into the housing as required, so as to prevent the rise of internal pressure, overcharge, and overdischarge of the lithium-ion battery.

This application provides an electrochemical device and an electronic device. The positive electrode of the electrochemical device includes a positive current collector and a positive active material layer disposed on at least one surface of the positive current collector. The positive active material layer includes a lithium manganese oxide. The lithium manganese oxide includes aluminum and sodium. By controlling the weight percentage A% of aluminum and the weight percentage B% of sodium in the positive active material to satisfy $0.01 \leq A \leq 2$ and $0.001 \leq B \leq 1$, the crystal structure of the lithium manganese oxide can be improved, and the amount of manganese dissolved out can be reduced, thereby improving the cycle performance of the electrochemical device, especially the cycle performance under high-temperature conditions, and also improving the high-temperature storage performance of the electrochemical device.

**Test Methods and Devices**

**Testing the content of each element in the positive active material layer:**

Disassembling a lithium-ion battery that has been discharged until a voltage of 2.8 V, and then dissolving the positive active material layer on the dried positive electrode plate in the disassembled battery by using a mixed solvent (for example, 0.4 gram of positive active material is dissolved by a mixed solvent, where the mixed solvent is 10 ml of aqua regia (the aqua regia is nitric acid mixed with hydrochloric acid at a volume ratio of 1: 1) mixed with 2 ml of HF. Bringing the solution to a predetermined volume of 100 mL, and then measuring the content of each element such as Al, Na, and Nb in the solution by using an inductively coupled plasma (ICP) analyzer.

**XRD test:**

Disassembling a lithium-ion battery that has been discharged until a voltage of 2.8 V, and then taking out a positive electrode plate from the battery. Scraping a positive active material layer off with a scraper to obtain a positive active material layer powder, and then putting the positive active material layer powder into a specimen holder of an XRD test instrument (Model: Bruker D8). Scanning the specimen at a speed of 2°/min in a scan angle range of 10° to 90° to obtain an XRD diffraction pattern. Taking the peaks corresponding to the characteristic peaks (111), (400), and (440) of the lithium manganese oxide in the XRD diffraction pattern, and then determining a ratio of $I_{(400)}$ to $I_{(111)}$, denoted as $I_{(400)}/I_{(111)}$, and a ratio of $I_{(440)}$ to $I_{(400)}$, denoted as $I_{(440)}/I_{(400)}$.

**Testing the average particle size of the particles in the positive active material layer:**

Disassembling a lithium-ion battery that has been discharged until a voltage of 2.8 V, and then slicing a positive electrode plate that is taken out of the battery and dried. Subsequently, observing a cross section of the slice by using a scanning electron microscope (SEM), and finding the particles in the cross section. Subsequently, determining the components of a single particle by using an energy dispersive spectrometer (EDS), and measuring the particle size of a single particle at a magnification of × 1000 by using the SEM. Selecting three SEM images, and calculating an average value. The test instrument is OXFORD EDS (X-max-20 mm²).

**Testing the compacted density of the positive active material layer:**

Disassembling a lithium-ion battery that has been discharged until a voltage of 2.8 V, and taking out a positive electrode plate from the battery. Soaking the positive electrode plate in dimethyl carbonate (DMC) for 30 minutes, removing the electrolytic solution and by-products from the surface of the positive electrode plate, and then drying the positive electrode plate in a fume hood for 4 hours. Taking out the dried positive electrode plate, selecting 5 positive electrode plates of 5 cm × 5 cm in size, and measuring the thickness of the positive electrode plates separately with a high-precision micrometer, where the thickness is denoted as $d_0$. Scraping off the positive active material layer from the positive electrode plate by using a scraper. Weighing the positive active material layer with a balance, and denoting the measured weight as m. Measuring, by using a high-precision micrometer, the thickness of the current collector stripped of the active material, and denoting the thickness as d. Calculating the compacted density of the positive active material layer according to the following formula:

$$\text{Compacted density } P = m/[5 \text{ cm} \times 5 \text{ cm} \times (d_0 - d)], \text{ unit: g/cm}^3.$$

The compacted density of the positive active material layer is an average of the measured values of the 5 positive electrode plates.

**Testing the capacity of the lithium-ion battery:**

Taking 4 lithium-ion batteries, and charging the batteries at a current of 0.5 C in a 25 °C environment until the voltage reaches an upper limit of 4.2 V Subsequently, discharging the batteries at a constant current of 0.2 C until a final voltage of 2.8 V Calculating the 0.2 C first-cycle discharge capacity as the capacity of the lithium-ion battery.

**Testing the cycle performance of a lithium-ion battery:**

Charging and discharging the lithium-ion battery repeatedly according to the following steps, and calculating the discharge capacity retention rate of the lithium-ion battery:

Charging and discharging the lithium-ion battery in a 25 °C environment initially. Charging the battery at a charge current of 0.5 C until the voltage reaches 4.2 V, and then discharging the battery at a constant current of 1 C until the voltage finally reaches 2.8 V, thereby completing one cycle. Recording the discharge capacity at the end of the first cycle as a first-cycle discharge capacity. Repeating the foregoing steps to complete 1000 charge-and-discharge cycles, recording the 1000th-cycle discharge capacity, and calculating according to the following formula:

25 °C cycle capacity retention rate = (1000th-cycle discharge capacity/first- cycle discharge capacity) $\times$ 100%.

Charging each battery at a current of 0.5 C in a 45 °C environment until the voltage reaches 4.2 V, and then discharging the battery at a constant current of 1 C until a final voltage of 2.8 V, thereby completing one cycle. Recording the discharge capacity at the end of the first cycle as a first-cycle discharge capacity. Repeating the foregoing steps to complete 500 charge-and-discharge cycles, recording the 500th-cycle discharge capacity, and calculating according to the following formula:

45 °C cycle capacity retention rate = (500th-cycle discharge capacity/first- cycle discharge capacity) $\times$ 100%.

**Testing the high-temperature storage performance of the lithium-ion battery:**

Charging the battery at a current of 0.5 C in a 25 °C environment until the voltage reaches an upper limit of 4.2 V, and then discharging the battery at a constant current of 1 C until a final voltage of 2.8 V Recording the discharge capacity as a before-storage capacity.

Charging the battery at a constant current of 0.5 C until the voltage reaches 3.85 V, and then charging the battery at a constant voltage of 4.2 V until the current drops below 0.05 C. Storing the battery in a 60 °C oven for 14 days. Discharging the battery at a constant current of 1 C until a final voltage of 2.8 V Subsequently, charging the battery at a current of 0.5 C until the voltage reaches 4.2 V, and then discharging the battery at a constant current of 1 C until the voltage reaches 2.8 V Recording the discharge capacity of the battery as an after-storage capacity, and calculating according to the following formula:

capacity retention rate of the lithium-ion battery = (after-storage capacity/before-storage capacity) $\times$ 100%.

**Embodiment 1**

**<Preparing a lithium manganese oxide>**

Mixing 203.3 grams of lithium carbonate (in which the weight percentage of lithium is 18.71%), 1000.0 grams of manganese dioxide (in which the weight percentage of Mn is 60.22% and the weight percentage of Na is 0.27%), and 29.96 grams of aluminum oxide (in which the weight percentage of aluminum is 52.91%) in a high-speed mixer at a speed of 300 r/min for 20 minutes. Putting the mixture in an air kiln, and heating up at a speed of 5 °C/min until 820 °C, and keeping this temperature for 24 hours. Subsequently, naturally cooling the mixture and then taking it out. Passing the mixture through a 300-mesh sieve to obtain a lithium manganese oxide (that is, modified LMO).

**<Preparing a positive electrode plate>**

Mixing the prepared positive active material, polyvinylidene difluoride (PVDF) as a binder, conductive carbon black, and carbon nanotubes (CNT) at a weight ratio of 95: 2: 1.8: 1.2, and then adding N-methyl-pyrrolidone (NMP) as a solvent. Blending the mixture in a vacuum mixer to form a homogeneous transparent positive slurry in which the solid content is 75%. Coating one surface of a 9-$\mu$m thick aluminum foil with the positive slurry evenly, and drying the aluminum foil at 90 °C. Performing cold calendering to obtain a positive electrode plate coated with a positive active material layer that is 100 $\mu$m thick in total. Subsequently, repeating the foregoing steps on the other surface of the positive electrode plate to obtain a positive electrode plate coated with the positive active material layer on both sides. Cutting the positive electrode plate into a size of 74 mm $\times$ 867 mm, welding tabs, and leaving the positive electrode plate ready for future use. The weight percentage of aluminum in the positive active material layer is 1.52%, and the weight percentage of sodium is 0.26%. The compacted density of the positive active material layer is 2.8 g/cm$^3$.

**<Preparing a negative electrode plate>**

Mixing artificial graphite as a negative active material, styrene butadiene rubber (SBR), and carboxymethyl cellulose (CMC) at a weight ratio of 98: 1: 1, adding deionized water as a solvent, blending the mixture to form a slurry in which the solid content is 70%, and stirring the slurry well. Coating one surface of an 8-$\mu$m thick copper foil with the slurry evenly, and drying the foil at 110 °C. Performing cold calendering to obtain a negative electrode plate coated with a 150-$\mu$m thick negative active material layer on a single side. Subsequently, repeating the foregoing coating step on the other surface of the negative electrode plate to obtain a negative electrode plate coated with the negative active material layer on both sides. Cutting the negative electrode plate into a size of 74 mm $\times$ 867 mm, welding tabs, and leaving the negative electrode plate ready for use.

**<Preparing a separator>**

Using a 15-$\mu$m thick polyethylene (PE) porous polymer film as a separator.

**<Preparing an electrolytic solution>**

Mixing propylene carbonate (PC), ethylene carbonate (EC), and diethyl carbonate (DEC) at a weight ratio of 1: 1: 1 in an environment in which the moisture content is less than 10 ppm, so as to form a nonaqueous organic solution. Adding lithium hexafluorophosphate (LiPF$_6$) into the nonaqueous organic solvent to dissolve, and stirring well to obtain an electrolytic solution. The molar concentration of the LiPF$_6$ in the electrolytic solution is 1.15 mol/L. Adding 2 wt% fluoroethylene carbonate, 2 wt% vinylene carbonate, and 1 wt% ethylene sulfate, and stirring well to make an electrolytic solution, where the weight percentage of the ingredients added in the electrolytic solution is based on the total weight of the electrolytic solution.

**<Preparing a lithium-ion battery>**

Stacking the above-prepared positive electrode plate, separator, and negative electrode plate in sequence in such a way that the separator is located between the positive electrode plate and the negative electrode plate to serve a function of separation, and winding the stacked structure to obtain an electrode assembly. Putting the electrode assembly into an aluminum plastic film package, dehydrating the packaged electrode assembly at 80 °C, and then injecting the prepared electrolytic solution. Performing vacuum sealing, standing, chemical formation, and shaping to obtain a lithium-ion battery.

**Embodiments 2 to 7**

The preparation method is basically similar to that in Embodiment 1 except the average particle size of the lithium manganese oxide and the element weight percentage, as shown in Table 1.

**Embodiment 8**

The preparation method is similar to that in Embodiment 1 except that 1000.0 grams of manganese dioxide is replaced by 850.3 grams of trimanganese tetraoxide, and except other parameter values shown in Table 1.

**Embodiment 9**

The preparation method is similar to that in Embodiment 1 and the parameter settings are identical to those in Embodiment 1 except that: a niobium-containing compound $Nb_2O_5$ is added into the lithium manganese oxide; the weight percentage of aluminum in the positive active material layer is adjusted to 1.01%; the weight percentage of sodium is adjusted to 0.26%; the weight percentage of niobium is adjusted to 0.09%; and, the compacted density of the positive active material layer is adjusted to 3.0 g/cm³.

**Embodiment 10**

The preparation method is similar to that in Embodiment 9 except the average particle size of the lithium manganese oxide and the element weight percentage, as shown in Table 1.

**Embodiment 11**

Mixing 203.3 grams of lithium carbonate (in which the weight percentage of lithium is 18.71%), 850.3 grams of trimanganese tetraoxide (in which the weight percentage of Mn is 70.82 % and the weight percentage of Na is 0.01 %), 19.10 grams of aluminum oxide (in which the weight percentage of aluminum is 52.91%), and 2.87 grams of niobium pentoxide (in which the weight percentage of niobium is 79.46%) in a high-speed mixer at a speed of 300 r/min for 20 minutes. Putting the mixture in an air kiln, and heating up at a speed of 5 °C/min until 750 °C, and keeping this temperature for 24 hours. Subsequently, naturally cooling the mixture and then taking it out. Passing the mixture through a 300-mesh sieve to obtain a lithium manganese oxide (that is, modified LMO) product.

**Embodiments 12 to 13**

The preparation method is similar to that in Embodiment 11 except the average particle size of the lithium manganese oxide and the element weight percentage, as shown in Table 1.

**Embodiments 14 to 21**

The preparation method is similar to that in Embodiment 9 except the average particle size of the lithium manganese oxide and the element weight percentage, as shown in Table 1.

**Embodiment 22**

Mixing the modified LMO as a positive active material and a polycrystalline lithium nickel cobalt manganese oxide ($LiNi_{0.60}Co_{0.10}Mn_{0.30}O_2$, denoted as NCM: 15.8 (601030), with an average particle size of 15.3 μm) to obtain a mixture, where the preparation method of the modified LMO is similar to that in Embodiment 9 except the element weight percentage and the average particle size, as shown in Table 1. Blending at a mixing ratio shown in Table 1 so that the molar ratio between nickel and manganese and the molar ratio between cobalt and manganese satisfy the values shown in Table 1. The parameter settings are identical to those in Embodiment 9 except that the element weight percentage and the average particle size of the ingredients in the positive active material layer are different, as shown in Table 1, and except that the compacted density of the positive active material layer is 3.3 g/cm³.

**Embodiments 23 to 33**

The preparation method is similar to that in Embodiment 22 except that the parameters are adjusted according to Table 1, such as the element weight percentage, the average particle size of the modified LMO, the type and average particle size of the polycrystalline lithium nickel cobalt manganese oxide, the molar ratio between nickel and manganese, and the molar ratio between cobalt and manganese.

**Embodiment 34**

Mixing the modified LMO as a positive active material and a polycrystalline lithium nickel cobalt manganese oxide ($LiNi_{0.50}Co_{0.20}Mn_{0.30}O_2$, denoted as NCM: 15.9 (502030), with an average particle size of 15.3 μm) to obtain a mixture, where the preparation method of the modified LMO is similar to that in Embodiment 11 except the element weight percentage and the average particle size, as shown in Table 1. Adjusting the ratio between the LMO and the NCM so that the molar ratio between nickel and manganese and the molar ratio between cobalt and manganese satisfy the values shown in Table 1. The element weight percentage and the particle size of the ingredients in the positive active material layer are shown in Table 1. Other settings are identical to those in Embodiment 11.

**Embodiment 35**

Mixing the modified LMO as a positive active material and lithium iron phosphate (LFP for short, with an average particle size of 1 $\mu$m) to obtain a mixture, where the preparation method of the modified LMO is similar to that in Embodiment 11 except the element weight percentage and the average particle size, as shown in Table 1. Adjusting the ratio between the LMO and the LFP so that the molar ratio between iron and manganese satisfies the value shown in Table 1. The element weight percentage and the particle size of the ingredients in the positive active material layer are shown in Table 1. Other settings are identical to those in Embodiment 11.

**Embodiment 36**

The preparation method is similar to that in Embodiment 35 except the parameter values shown in Table 1.

**Embodiment 37**

Mixing the modified LMO as a positive active material, a polycrystalline lithium nickel cobalt manganese oxide ($LiNi_{0.55}Co_{0.15}Mn_{0.30}O_2$, denoted as NCM: 16.2 (551530), with an average particle size of 16.2 $\mu$m), and lithium iron phosphate (LFP for short, with an average particle size of 1 $\mu$m) to obtain a mixture, where the preparation method of the modified LMO is similar to that in Embodiment 9 except the element weight percentage and the average particle size, as shown in Table 1. The molar ratio between nickel and manganese and the molar ratio between cobalt and manganese satisfy the values shown in Table 1. The element weight percentage and the particle size of the ingredients in the positive active material layer are shown in Table 1. The compacted density of the positive active material layer is 3.3 g/cm$^3$. Other settings are identical to those in Embodiment 9.

**Embodiment 38**

Mixing the modified LMO as a positive active material, a monocrystalline lithium nickel cobalt manganese oxide ($LiNi_{0.55}Co_{0.15}Mn_{0.30}O_2$, denoted as NCM: 6.4 (551530), with an average particle size of 6.4 $\mu$m), and lithium iron phosphate (LFP for short, with an average particle size of 1 $\mu$m) to obtain a mixture, where the preparation method of the modified LMO is similar to that in Embodiment 11 except the element weight percentage and the average particle size, as shown in Table 1. The molar ratio between nickel and manganese and the molar ratio between cobalt and manganese satisfy the values shown in Table 1. Other settings are identical to those in Embodiment 11.

**Embodiment 39**

Mixing the modified LMO as a positive active material, a polycrystalline lithium nickel cobalt manganese oxide ($LiNi_{0.55}Co_{0.15}Mn_{0.30}O_2$, denoted as NCM: 16.2 (551530), with an average particle size of 16.2 $\mu$m), and lithium iron phosphate (LFP for short, with an average particle size of 1 $\mu$m) to obtain a mixture, where the preparation method of the modified LMO is similar to that in Embodiment 9 except the element weight percentage and the average particle size, as shown in Table 1. The molar ratio between nickel and manganese and the molar ratio between cobalt and manganese satisfy the values shown in Table 1. Other settings are identical to those in Embodiment 9.

**Embodiments 40 to 41**

The preparation method is similar to that in Embodiment 39 except the parameter values shown in Table 1.

**Comparative Embodiment 1**

Identical to Embodiment 1 except that the positive active material is $LiMn_2O_4$ that is not doped with aluminum.

**Comparative Embodiment 2**

Identical to Embodiment 22 except that the positive active material is $LiMn_2O_4$ that is not doped with aluminum.

**Comparative Embodiment 3**

Identical to Embodiment 37 except that the positive active material is $LiMn_2O_4$ that is not doped with aluminum.

**Comparative Embodiment 4**

Identical to Embodiment 9 except that the element weight percentage of the positive active material is adjusted according to Table 1.

**Comparative Embodiment 5**

Identical to Embodiment 9 except that the element weight percentage of the positive active material is adjusted according to Table 1.

Table 1

| | A (weight percentage of Al) | B (weight percentage of Na) | C (weight percentage of Nb) | $I_{(400)}/I_{(111)}$ | $I_{(440)}/I_{(400)}$ | Average particle size (μm) | Weight percentage of Co (%) | Ni: Mn (molar ratio) | Co: Mn (molar ratio) | Fe: Mn (molar ratio) | 25 °C cycle capacity retention rate (%) | 45 °C cycle capacity retention rate (%) | Storage capacity retention rate (%) |
|---|---|---|---|---|---|---|---|---|---|---|---|---|---|
| Embodiment 1 | 1.52 | 0.26 | / | 0.32 | 0.44 | Modified LMO: 18.0 | / | / | / | / | 82.8 | 75 | 84.3 |
| Embodiment 2 | 1.86 | 0.25 | / | 0.3 | 0.44 | Modified LMO: 18.1 | / | / | / | / | 82.9 | 74.9 | 84.4 |
| Embodiment 3 | 1.02 | 0.25 | / | 0.33 | 0.45 | Modified LMO: 17.9 | / | / | / | / | 81.7 | 73.2 | 84.1 |
| Embodiment 4 | 0.88 | 0.25 | / | 0.35 | 0.45 | Modified LMO: 18.2 | / | / | / | / | 80.7 | 72.1 | 83.9 |
| Embodiment 5 | 0.43 | 0.25 | / | 0.35 | 0.45 | Modified LMO: 18.2 | / | / | / | / | 80.1 | 71.7 | 83.7 |
| Embodiment 6 | 0.22 | 0.25 | / | 0.36 | 0.45 | Modified LMO: 18.2 | / | / | / | / | 79.7 | 71.3 | 83.5 |
| Embodiment 7 | 2.00 | 0.35 | / | 0.27 | 0.43 | Modified LMO: 17.5 | / | / | / | / | 82.9 | 74.7 | 83.8 |
| Embodiment 8 | 0.02 | 0.001 | / | 0.26 | 0.35 | Modified LMO: 7.9 | / | / | / | / | 73.6 | 62 | 76.3 |
| Embodiment 9 | 1.01 | 0.26 | 0.09 | 0.34 | 0.46 | Modified LMO: 18.1 | / | / | / | / | 82.1 | 73.5 | 86.5 |
| Embodiment 10 | 1.02 | 0.25 | 0.23 | 0.38 | 0.47 | Modified LMO: 18.0 | / | / | / | / | 82.2 | 73.6 | 88.7 |
| Embodiment 11 | 1.02 | 0.01 | 0.23 | 0.38 | 0.47 | Modified LMO: 8.5 | / | / | / | / | 85.6 | 76 | 90.3 |
| Embodiment 12 | 1.02 | 0.02 | 0.57 | 0.43 | 0.5 | Modified LMO: 8.4 | / | / | / | / | 85.8 | 77 | 91.5 |
| Embodiment 13 | 1.01 | 0.03 | 0.9 | 0.45 | 0.53 | Modified LMO: 8.4 | / | / | / | / | 85.5 | 76.8 | 92.1 |

(continued)

| | A (weight percent age of Al) | B (weight percent age of Na) | C (weight percent age of Nb) | I(400)/I(111) | I(440)/I(400) | Average particle size (μm) | Weight percent age of Co (%) | Ni: Mn (molar ratio) | Co: Mn (molar ratio) | Fe: Mn (molar ratio) | 25 °C cycle capacity retention rate (%) | 45 °C cycle capacity retention rate (%) | Storage capacity retention rate (%) |
|---|---|---|---|---|---|---|---|---|---|---|---|---|---|
| Embodiment 14 | 1.01 | 0.26 | 0.23 | 0.38 | 0.47 | Modified LMO: 13.0 | / | / | / | / | 82.3 | 73.7 | 88.1 |
| Embodiment 15 | 0.08 | 0.27 | 0.23 | 0.42 | 0.47 | Modified LMO: 13.2 | / | / | / | / | 76.7 | 72.3 | 88.2 |
| Embodiment 16 | 1.01 | 0.26 | 0.24 | 0.37 | 0.46 | Modified LMO: 13.3 | / | / | / | / | 81.9 | 73 | 87.3 |
| Embodiment 17 | 1.53 | 0.26 | 0.23 | 0.35 | 0.46 | Modified LMO: 13.0 | / | / | / | / | 82.9 | 74.1 | 87.5 |
| Embodiment 18 | 1.86 | 0.26 | 0.24 | 0.35 | 0.46 | Modified LMO: 13.1 | / | / | / | / | 85.2 | 77.3 | 88.6 |
| Embodiment 19 | 1.86 | 0.31 | 0.23 | 0.35 | 0.46 | Modified LMO: 13.2 | / | / | / | / | 84.7 | 76.8 | 88.3 |
| Embodiment 20 | 1.91 | 0.95 | 0.24 | 0.34 | 0.45 | Modified LMO: 13.2 | / | / | / | / | 82 | 73.2 | 87 |
| Embodiment 21 | 1.8 | 0.35 | 1 | 0.48 | 0.55 | Modified LMO: 18.2 | / | / | / | / | 83.2 | 76.2 | 90.3 |
| Embodiment 22 | 0.83 | 0.35 | 0.18 | 0.47 | 0.49 | Modified LMO: 18.0, NCM: 15.8 (601030) | 1.22 | 0.13:1 | 0.02:1 | / | 86.8 | 76.6 | 91.7 |
| Embodiment 23 | 0.82 | 0.36 | 0.18 | 0.48 | 0.49 | Modified LMO: 18.1, NCM: 15.7 (600535) | 0.61 | 0.13:1 | 0.01:1 | / | 86.5 | 76.9 | 91.8 |

(continued)

| | A (weight percent age of Al) | B (weight percent age of Na) | C (weight percent age of Nb) | $I_{(400)}/I_{(111)}$ | $I_{(440)}/I_{(400)}$ | Average particle size (μm) | Weight percent age of Co (%) | Ni: Mn (molar ratio) | Co: Mn (molar ratio) | Fe: Mn (molar ratio) | 25 °C cycle capacity retention rate (%) | 45 °C cycle capacity retention rate (%) | Storage capacity retention rate (%) |
|---|---|---|---|---|---|---|---|---|---|---|---|---|---|
| Embodiment 24 | 0.81 | 0.35 | 0.17 | 0.47 | 0.5 | Modified LMO: 17.9, NCM: 16.3 (551530) | 1.83 | 0.12:1 | 0.03:1 | / | 86.9 | 77.1 | 91.9 |
| Embodiment 25 | 0.83 | 0.35 | 0.19 | 0.48 | 0.5 | Modified LMO: 17.9, NCM: 15.8 (831205) | 1.45 | 0.19:1 | 0.03:1 | / | 86.5 | 76.8 | 92.1 |
| Embodiment 26 | 0.81 | 0.35 | 0.18 | 0.48 | 0.5 | Modified LMO: 17.9, NCM: 15.7 (333333) | 4.05 | 0.07:1 | 0.07:1 | / | 87.2 | 78.2 | 91.3 |
| Embodiment 27 | 0.82 | 0.35 | 0.18 | 0.47 | 0.49 | Modified LMO: 18.0, NCM: 6.5 (601030) | 1.22 | 0.13:1 | 0.02:1 | / | 86.9 | 76.6 | 90.7 |
| Embodiment 28 | 0.92 | 0.4 | 0.19 | 0.47 | 0.5 | Modified LMO: 18.2, NCM: 16.3 (551530) | 0.91 | 0.05:1 | 0.02:1 | / | 84.5 | 75.3 | 90.5 |
| Embodiment 29 | 0.72 | 0.29 | 0.16 | 0.46 | 0.49 | Modified LMO: 17.9, NCM: 16.4 (551530) | 2.75 | 0.20:1 | 0.05:1 | / | 88.3 | 79.2 | 93.5 |
| Embodiment 30 | 0.62 | 0.23 | 0.14 | 0.47 | 0.49 | Modified LMO: 17.9, NCM: 16.4 (551530) | 3.66 | 0.29:1 | 0.08:1 | / | 90.0 | 81.1 | 94.6 |

| | A (weight percent age of Al) | B (weight percent age of Na) | C (weight percent age of Nb) | $I_{(400)}/I_{(111)}$ | $I_{(440)}/I_{(400)}$ | Average particle size ($\mu$m) | Weight percent age of Co (%) | Ni: Mn (molar ratio) | Co: Mn (molar ratio) | Fe: Mn (molar ratio) | 25 °C cycle capaci ty retenti on rate (%) | 45 °C cycle capaci ty retenti on rate (%) | Storage capacity retention rate (%) |
|---|---|---|---|---|---|---|---|---|---|---|---|---|---|
| Embodiment 31 | 0.51 | 0.21 | 0.12 | 0.46 | 0.50 | Modified LMO: 18.0, NCM: 16.3 (551530) | 4.58 | 0.41: 1 | 0.11:1 | / | 91.2 | 82.2 | 95.5 |
| Embodiment 32 | 0.42 | 0.18 | 0.10 | 0.47 | 0.49 | Modified LMO: 18.0, NCM: 16.3 (551530) | 5.49 | 0.54:1 | 0.15:1 | / | 92.5 | 83.4 | 97.0 |
| Embodiment 33 | 0.32 | 0.14 | 0.07 | 0.46 | 0.50 | Modified LMO: 18.0, NCM: 16.3 (551530) | 6.41 | 0.73:1 | 0.20:1 | / | 92.1 | 83.2 | 96.7 |
| Embodiment 34 | 0.31 | 0.03 | 0.07 | 0.45 | 0.5 | Modified LMO: 10.3, NCM: 15.9 (502030) | 8.54 | 0.66:1 | 0.26:1 | / | 94.2 | 85.3 | 98.8 |
| Embodiment 35 | 1.35 | 0.18 | 0.18 | 0.47 | 0.52 | Modified LMO: 13.8, LFP: 1.0 | / | / | / | 0.06: 1 | 82.8 | 74.5 | 90.3 |
| Embodiment 36 | 1.06 | 0.15 | 0.14 | 0.47 | 0.52 | Modified LMO: 14.0, LFP: 1.0 | / | / | / | 0.25: 1 | 83.1 | 75.3 | 95.3 |
| Embodiment 37 | 1.21 | 0.17 | 0.16 | 0.37 | 0.47 | Modified LMO: 13.5, NCM: 16.2 (551530), LFP: 1.0 | 0.92 | 0.06:1 | 0.02:1 | 0.07:1 | 85.6 | 80.5 | 94.5 |

| | A (weight percentage of Al) | B (weight percentage of Na) | C (weight percentage of Nb) | $I_{(400)}/I_{(111)}$ | $I_{(440)}/I_{(400)}$ | Average particle size ($\mu$m) | Weight percentage of Co (%) | Ni: Mn (molar ratio) | Co: Mn (molar ratio) | Fe: Mn (molar ratio) | 25 °C cycle capacity retention rate (%) | 45 °C cycle capacity retention rate (%) | Storage capacity retention rate (%) |
|---|---|---|---|---|---|---|---|---|---|---|---|---|---|
| Embodiment 38 | 1.22 | 0.18 | 0.15 | 0.37 | 0.46 | Modified LMO: 13.8, NCM: 6.4 (551530), LFP: 1.0 | 0.92 | 0.06:1 | 0.02:1 | 0.07:1 | 85.8 | 80.4 | 94.2 |
| Embodiment 39 | 1.21 | 0.01 | 0.16 | 0.37 | 0.44 | Modified LMO: 8.2, NCM: 16.2 (551530), LFP: 1.0 | 0.92 | 0.06:1 | 0.02:1 | 0.07:1 | 88.3 | 82.7 | 95 |
| Embodiment 40 | 1.21 | 0.01 | 0.17 | 0.37 | 0.45 | Modified LMO: 8.2, NCM: 16.2 (551530), LFP: 1.5 | 0.92 | 0.06: 1 | 0.02: 1 | 0.07:1 | 88.2 | 82.8 | 94.3 |
| Embodiment 41 | 1.22 | 0.01 | 0.17 | 0.36 | 0.45 | Modified LMO: 8.2, NCM: 16.2 (551530), LFP: 0.8 | 0.92 | 0.06: 1 | 0.02: 1 | 0.07:1 | 87.6 | 82 | 94.8 |
| Comparative Embodiment 1 | / | 0.27 | / | 0.62 | 0.29 | Modified LMO: 18.1 | / | / | / | / | 50.2 | 20 | 60.1 |
| Comparative Embodiment 2 | / | 0.27 | / | 0.62 | 0.29 | NCM: 16.2 (333333), modified LMO: 18.1 | 1.83 | 0.12:1 | 0.03:1 | / | 67.5 | 54.3 | 71.3 |

(continued)

| | A (weight percentage of Al) | B (weight percentage of Na) | C (weight percentage of Nb) | $I_{(400)}/I_{(111)}$ | $I_{(440)}/I_{(400)}$ | Average particle size ($\mu$m) | Weight percentage of Co (%) | Ni: Mn (molar ratio) | Co: Mn (molar ratio) | Fe: Mn (molar ratio) | 25 °C cycle capacity retention rate (%) | 45 °C cycle capacity retention rate (%) | Storage capacity retention rate (%) |
|---|---|---|---|---|---|---|---|---|---|---|---|---|---|
| Comparative Embodiment 3 | / | 0.27 | / | 0.62 | 0.28 | NCM: 16.2 (333333), modified LMO: 13.5, LFP: 1.0 | 0.92 | 0.06:1 | 0.02:1 | 0.07:1 | 65.4 | 53.5 | 70.3 |
| Comparative Embodiment 4 | 2.1 | 0.27 | 1.1 | 0.51 | 0.57 | LMO: 18.3 | / | / | / | / | 73 | 62.2 | 80 |
| Comparative Embodiment 5 | 1.8 | 1.1 | 1.1 | 0.52 | 0.58 | LMO: 17.9 | / | / | / | / | 70.8 | 61.2 | 78.4 |

The parameters of various combinations of A, B, and C are shown in Table 2:

**Table 2**

|  | A+B | A/B | A+C | A+B+C | C/B |
|---|---|---|---|---|---|
| Embodiment 1 | 1.78 | 5.85 | / | / | / |
| Embodiment 2 | 2.11 | 7.44 | / | / | / |
| Embodiment 3 | 1.27 | 4.08 | / | / | / |
| Embodiment 4 | 1.13 | 3.52 | / | / | / |
| Embodiment 5 | 0.68 | 1.72 | / | / | / |
| Embodiment 6 | 0.47 | 0.88 | / | / | / |
| Embodiment 7 | 2.35 | 5.71 | / | / | / |
| Embodiment 8 | 0.021 | 20 | / | / | / |
| Embodiment 9 | 1.27 | 3.88 | 1.1 | 1.36 | 0.35 |
| Embodiment 10 | 1.27 | 4.08 | 1.25 | 1.5 | 0.92 |
| Embodiment 11 | 1.03 | 102 | 1.25 | 1.26 | 23 |
| Embodiment 12 | 1.04 | 51 | 1.59 | 1.61 | 28.5 |
| Embodiment 13 | 1.02 | 33.7 | 1.91 | 1.94 | 30 |
| Embodiment 14 | 1.27 | 3.88 | 1.24 | 1.5 | 0.88 |
| Embodiment 15 | 0.35 | 0.30 | 0.31 | 0.58 | 0.85 |
| Embodiment 16 | 1.27 | 3.88 | 1.25 | 1.51 | 0.92 |
| Embodiment 17 | 1.79 | 5.88 | 1.76 | 2.02 | 0.88 |
| Embodiment 18 | 2.12 | 7.15 | 2.1 | 2.36 | 0.92 |
| Embodiment 19 | 2.17 | 6 | 2.09 | 2.4 | 0.74 |
| Embodiment 20 | 2.86 | 2.01 | 2.15 | 3.1 | 3.96 |
| Embodiment 21 | 2.15 | 5.14 | 2.8 | 3.15 | 2.86 |
| Embodiment 22 | 1.18 | 2.37 | 1.01 | 1.36 | 0.51 |
| Embodiment 23 | 1.18 | 2.28 | 1 | 1.36 | 0.5 |
| Embodiment 24 | 1.16 | 2.31 | 0.98 | 1.33 | 0.49 |
| Embodiment 25 | 1.18 | 2.37 | 1.02 | 1.37 | 0.54 |
| Embodiment 26 | 1.16 | 2.31 | 0.99 | 1.34 | 0.51 |
| Embodiment 27 | 1.17 | 2.34 | 1.00 | 1.35 | 0.51 |
| Embodiment 28 | 1.32 | 2.3 | 1.11 | 1.51 | 0.475 |
| Embodiment 29 | 1.01 | 2.48 | 0.88 | 1.17 | 0.55 |
| Embodiment 30 | 0.85 | 2.70 | 0.76 | 0.99 | 0.61 |
| Embodiment 31 | 0.72 | 2.43 | 0.63 | 0.84 | 0.57 |
| Embodiment 32 | 0.6 | 2.33 | 0.52 | 0.7 | 0.56 |
| Embodiment 33 | 0.46 | 2.29 | 0.39 | 0.53 | 0.5 |
| Embodiment 34 | 0.34 | 10.33 | 0.38 | 0.41 | 2.33 |
| Embodiment 35 | 1.53 | 7.5 | 1.53 | 1.71 | 1 |
| Embodiment 36 | 1.21 | 7.07 | 1.2 | 1.35 | 0.93 |
| Embodiment 37 | 1.38 | 7.12 | 1.37 | 1.54 | 0.94 |

(continued)

| | A+B | A/B | A+C | A+B+C | C/B |
|---|---|---|---|---|---|
| Embodiment 38 | 1.4 | 6.78 | 1.37 | 1.55 | 0.83 |
| Embodiment 39 | 1.22 | 121 | 1.37 | 1.38 | 16 |
| Embodiment 40 | 1.22 | 121 | 1.38 | 1.39 | 17 |
| Embodiment 41 | 1.23 | 122 | 1.39 | 1.4 | 17 |
| Comparative Embodiment 1 | / | / | / | / | / |
| Comparative Embodiment 2 | / | / | / | / | / |
| Comparative Embodiment 3 | / | / | / | / | / |
| Comparative Embodiment 4 | 2.37 | 7.78 | 3.2 | 3.47 | 4.07 |
| Comparative Embodiment 5 | / | / | 2.9 | / | / |

In Table 1 and Table 2, "/" means "not included" or "not measured".

As can be seen from Embodiments 1 to 8 and Comparative Embodiment 1, the lithium-ion battery includes the positive active material layer that contains aluminum at a weight percentage of A% and sodium at a weight percentage of B% according to this application, where $0.01 \leq A \leq 2$ and $0.001 \leq B \leq 1$. Therefore, the 25 °C cycle capacity retention rate, the 45 °C cycle capacity retention rate, and the storage capacity retention rate of the lithium-ion battery are all enhanced significantly, indicating that the lithium-ion battery according to this application is excellent in cycle performance, especially high-temperature cycle performance, and excellent in high-temperature storage performance.

As can be seen from Embodiments 1 to 8 and Comparative Embodiments 1 to 3, when the positive active material contains no lithium manganese oxide according to this application (such as in Comparative Embodiments 1 to 3), the $I_{(400)}/I_{(111)}$ ratio and the $I_{(440)}/I_{(400)}$ ratio go beyond the ranges specified in this application. By contrast, the lithium-ion batteries with the $I_{(400)}/I_{(111)}$ ratio and the $I_{(440)}/I_{(400)}$ ratio falling within the ranges specified in this application are excellent in cycle performance, especially high-temperature cycle performance, and excellent in high-temperature storage performance.

As can be seen from Embodiments 9 to 21 and Comparative Embodiments 4 to 5, when the weight percentage of aluminum in the positive active material is unduly high (such as in Comparative Embodiment 4) or the weight percentage of sodium is unduly high (such as in Comparative Embodiment 5), the $I_{(400)}/I_{(111)}$ ratio and the $I_{(440)}/I_{(400)}$ ratio go beyond the ranges specified in this application. By contrast, for the lithium-ion batteries with the weight percentage of aluminum and sodium falling within the ranges specified in this application, the 25 °C cycle capacity retention rate, the 45 °C cycle capacity retention rate, and the storage capacity retention rate are improved significantly.

As can be seen from comparison between Embodiments 1 to 8 and Embodiments 9 to 21, the high-temperature storage performance of the lithium-ion battery is further enhanced when the positive active material layer further includes niobium according to this application and the weight percentage C% falls within the range specified herein.

As can be seen from comparison between Embodiments 9 to 21 and Embodiments 22 to 34, when the positive active material layer further includes a lithium nickel cobalt manganese oxide, the 25°C cycle capacity retention rate, the 45°C cycle capacity retention rate, and the storage capacity retention rate of the lithium-ion battery are further enhanced.

As can be seen from Embodiments 22 to 34, the difference in the weight percentage of cobalt in the lithium nickel cobalt manganese oxide affects the cycle performance and high-temperature storage performance of the lithium-ion battery. However, as long as the weight percentage of the lithium nickel cobalt manganese oxide falls within the range specified herein, a lithium-ion battery with excellent cycle performance and excellent high-temperature storage performance can be achieved.

As can be seen from Embodiments 37 to 41, when the positive active material layer further includes lithium iron phosphate, the 25°C cycle capacity retention rate, the 45°C cycle capacity retention rate, and the storage capacity retention rate of the lithium-ion battery are further enhanced.

The relationships between the aluminum content, sodium content, and niobium content, that is, the values of A+B, A/B, A+C, A+B+C, and C/B, usually also affect the cycle performance and high-temperature storage performance of the lithium-ion battery. Further, as can be seen from Embodiments 1 to 41, as long as the parameters of the combinations of A, B, and C fall within the ranges specified herein, a lithium-ion battery with excellent cycle performance and excellent high-temperature storage performance can be achieved.

The average particle sizes of the modified LMO, NCM, and LFP, the weight percentage of Co in the positive active material layer, the molar ratio between Ni and Mn, the molar ratio between Co and Mn, the molar ratio between Fe and Mn, and the compacted density of the positive active material layer usually also affect the cycle performance and high-temperature storage performance of the lithium-ion battery. Further, as can be seen from Embodiments 1 to 41, as long as the above parameters fall within the ranges specified herein, a lithium-ion battery with excellent cycle performance and excellent high-temperature storage performance can be achieved.

FIG. 1 is an XRD pattern of positive electrode plate powder according to Embodiment 35 of this application. As shown in FIG. 1, the positive active material according to this application exhibits, at 18° to 20°, a first diffraction peak corresponding to the (111) crystal plane; at 43° to 45°, exhibits a second diffraction peak corresponding to the (400) crystal plane; and at 63° to 65°, exhibits a third diffraction peak corresponding to the (440) crystal plane. The peak intensities satisfy $0.25 < I_{(400)}/I_{(111)} < 0.5$, and $0.35 < I_{(440)}/I_{(400)} < 0.55$.

What is described above is merely exemplary embodiments of this application, but is not intended to limit this application. Any modifications, equivalent replacements, improvements, and the like made without departing from the spirit and principles of this application still fall within the protection scope of this application.

## Claims

1. An electrochemical device, comprising a positive electrode, a negative electrode, a separator, and an electrolytic solution, wherein the positive electrode comprises a positive current collector and a positive active material layer disposed on at least one surface of the positive current collector, the positive active material layer comprises a lithium manganese oxide, the lithium manganese oxide comprises aluminum and sodium, and, based on a weight of the positive active material, a weight percentage of the aluminum is A%, a weight percentage of the sodium is B%, and the electrochemical device satisfies $0.01 \leq A \leq 2$ and $0.001 \leq B \leq 1$.

2. The electrochemical device according to claim 1, satisfying at least one of conditions (a) or (b):

$$(a)\ 0.011 \leq A + B \leq 2.5;$$

and

$$(b)\ 0.1 \leq A/B \leq 125.$$

3. The electrochemical device according to claim 1, satisfying $0.03 \leq A + B < 2$ and $2 < A/B \leq 125$.

4. The electrochemical device according to claim 1, further comprising niobium, and, based on the weight of the positive active material, a weight percentage of the niobium is C% and satisfies $0 < C \leq 1$.

5. The electrochemical device according to claim 4, satisfying at least one of conditions (c) to (d):

$$(c)\ 0.011 < A + C \leq 2.8;$$

$$(d)\ 0.011 \leq A + B + C \leq 3.3;$$

and

$$(e)\ 0 < C/B \leq 40.$$

6. The electrochemical device according to claim 4, satisfying $0.07 \leq A + C \leq 2.3$.

7. The electrochemical device according to claim 1, wherein, in an XRD test, the lithium manganese oxide satisfies at least one of conditions (f) to (g):

(f) the lithium manganese oxide exhibits, at 18° to 20°, a first diffraction peak corresponding to a (111) crystal plane, and a peak intensity of the first diffraction peak is $I_{(111)}$;

(g) the lithium manganese oxide exhibits, at 43° to 45 °, a second diffraction peak corresponding to a (400) crystal plane, and a peak intensity of the second diffraction peak is $I_{c400}$); and

(h) the lithium manganese oxide exhibits, at 63 ° to 65 °, a third diffraction peak corresponding to a (440) crystal plane, and a peak intensity of the third diffraction peak is $I_{(440)}$.

8.  The electrochemical device according to claim 7, satisfying at least one of conditions (i) to (j):

$$(i)\ 0.25 < I_{(400)}/I_{(111)} < 0.55;$$

and

$$(j)\ 0.35 < I_{(440)}/I_{(400)} < 0.55.$$

9.  The electrochemical device according to claim 1, wherein the positive active material layer further comprises a lithium nickel cobalt manganese oxide, and a weight percentage of cobalt in the lithium nickel cobalt manganese oxide is less than or equal to 15%.

10.  The electrochemical device according to claim 9, wherein a molar ratio between nickel and manganese in the positive active material layer is 0.02: 1 to 0.7: 1, and a molar ratio between cobalt and manganese is less than or equal to 0.3: 1.

11.  The electrochemical device according to any one of claims 1 to 10, wherein the positive active material layer further comprises lithium iron phosphate, and an average particle size of the lithium iron phosphate is less than an average particle size of the lithium manganese oxide.

12.  The electrochemical device according to claim 11, wherein a molar ratio between iron and manganese in the positive active material layer is 0.02: 1 to 0.25: 1.

13.  The electrochemical device according to claim 11, wherein, based on the weight of the positive active material layer, a weight percentage of the lithium iron phosphate is less than or equal to 30%.

14.  The electrochemical device according to claim 1, wherein a compacted density P of the positive active material layer satisfies $2.7\ \text{g/cm}^3 \le P \le 4.0\ \text{g/cm}^3$.

15.  An electronic device, wherein the electronic device comprises the electrochemical device according to any one of claims 1 to 14.

FIG. 1

## INTERNATIONAL SEARCH REPORT

International application No.

**PCT/CN2021/112091**

### A. CLASSIFICATION OF SUBJECT MATTER

H01M 10/0525(2010.01)i; H01M 4/505(2010.01)i; H01M 4/50(2010.01)i; H01M 4/38(2006.01)i; H01M 4/36(2006.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC, STN: 宁德新能源科技有限公司, 袁国霞, 电池, 电极, 正极, 活性物质, 锂锰氧化物, 锰酸锂, LiMnO4, 掺杂, 姜泰勒, Jahn-Teller, 溶出, 溶解, 不稳定, 高温, 晶形, 晶面, 钠, Na, 铝, Al, 铌, Nb, 镍, Ni, 钴, Co, 磷酸铁锂, anode?, positive, dop+, crystal+, XRD

### C. DOCUMENTS CONSIDERED TO BE RELEVANT

| Category* | Citation of document, with indication, where appropriate, of the relevant passages | Relevant to claim No. |
|---|---|---|
| X | CN 105428641 A (GUILIN UNIVERSITY OF TECHNOLOGY) 23 March 2016 (2016-03-23) description, paragraphs [0030]-[0035], and figure 1 | 1-3, 7, 8, 14, 15 |
| Y | CN 105428641 A (GUILIN UNIVERSITY OF TECHNOLOGY) 23 March 2016 (2016-03-23) description, paragraphs [0030]-[0035], and figure 1 | 4-6, 9-13 |
| Y | YI, TingFeng et al. "Lithium-ion Insertion Kinetics of Nb-doped LiMn2O4 Positive-electrode Material" *Ceramics International*, Vol. 39, No. 4, 05 November 2012 (2012-11-05), ISSN: 0272-8842, pp. 4673-4678 | 4-6 |
| Y | CN 111106328 A (SAMSUNG ELECTRONICS CO., LTD. et al.) 05 May 2020 (2020-05-05) description, paragraphs [0127]-[0134] | 9-13 |
| A | CN 105390736 A (TOYOTA MOTOR CORPORATION) 09 March 2016 (2016-03-09) entire document | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 April 2022** | **25 April 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/112091** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2012159253 A1 (NINGBO INSTITUTE OF MATERIAL TECHNOLOGY AND ENGINEERING, CHINESE ACADEMY OF SCIENCES) 29 November 2012 (2012-11-29) entire document | 1-15 |
| A | CN 112687944 A (NINGDE CONTEMPORARY AMPEREX TECHNOLOGY CO., LTD.) 20 April 2021 (2021-04-20) entire document | 1-15 |
| A | CN 102364731 A (ANHUI UNIVERSITY OF TECHNOLOGY) 29 February 2012 (2012-02-29) entire document | 1-15 |
| A | CN 104507864 A (LG CHEMICAL LTD.) 08 April 2015 (2015-04-08) entire document | 1-15 |

Form PCT/ISA/210 (second sheet) (January 2015)

**INTERNATIONAL SEARCH REPORT**
Information on patent family members

International application No.

**PCT/CN2021/112091**

| Patent document cited in search report | | | Publication date (day/month/year) | Patent family member(s) | | | Publication date (day/month/year) |
|---|---|---|---|---|---|---|---|
| CN | 105428641 | A | 23 March 2016 | None | | | |
| CN | 111106328 | A | 05 May 2020 | JP | 2020068210 | A | 30 April 2020 |
| | | | | KR | 20200046749 | A | 07 May 2020 |
| | | | | EP | 3644414 | A1 | 29 April 2020 |
| | | | | US | 2020136126 | A1 | 30 April 2020 |
| CN | 105390736 | A | 09 March 2016 | US | 2016064733 | A1 | 03 March 2016 |
| | | | | KR | 20160027918 | A | 10 March 2016 |
| | | | | DE | 102015114254 | A1 | 03 March 2016 |
| | | | | JP | 2016054026 | A | 14 April 2016 |
| WO | 2012159253 | A1 | 29 November 2012 | EP | 2717360 | A1 | 09 April 2014 |
| | | | | KR | 20140014289 | A | 05 February 2014 |
| | | | | JP | 2014515541 | A | 30 June 2014 |
| | | | | US | 2014170492 | A1 | 19 June 2014 |
| CN | 112687944 | A | 20 April 2021 | None | | | |
| CN | 102364731 | A | 29 February 2012 | None | | | |
| CN | 104507864 | A | 08 April 2015 | JP | 2016509567 | A | 31 March 2016 |
| | | | | JP | 2015527719 | A | 17 September 2015 |
| | | | | WO | 2015012649 | A1 | 29 January 2015 |
| | | | | CN | 104507865 | A | 08 April 2015 |
| | | | | EP | 2918545 | A1 | 16 September 2015 |
| | | | | CN | 104507866 | A | 08 April 2015 |
| | | | | US | 2015037678 | A1 | 05 February 2015 |
| | | | | WO | 2015012648 | A1 | 29 January 2015 |
| | | | | US | 2015357627 | A1 | 10 December 2015 |
| | | | | KR | 20150013076 | A | 04 February 2015 |
| | | | | KR | 20150013078 | A | 04 February 2015 |
| | | | | TW | 201526370 | A | 01 July 2015 |
| | | | | EP | 2865647 | A1 | 29 April 2015 |
| | | | | EP | 2995589 | A1 | 16 March 2016 |
| | | | | TW | 201522232 | A | 16 June 2015 |
| | | | | JP | 2015529958 | A | 08 October 2015 |
| | | | | JP | 2015530966 | A | 29 October 2015 |
| | | | | CN | 104903238 | A | 09 September 2015 |
| | | | | KR | 20150013075 | A | 04 February 2015 |
| | | | | KR | 20150013077 | A | 04 February 2015 |
| | | | | TW | 201524909 | A | 01 July 2015 |
| | | | | WO | 2015012651 | A1 | 29 January 2015 |
| | | | | EP | 2868630 | A1 | 06 May 2015 |
| | | | | TW | 201527221 | A | 16 July 2015 |
| | | | | WO | 2015012650 | A1 | 29 January 2015 |

Form PCT/ISA/210 (patent family annex) (January 2015)